# EUROPEAN PATENT APPLICATION

(11) **EP 1 995 132 A2**
(43) Date of publication of application: **26.11.2008**
(21) Application number: 08009289.3
(22) Date of filing: 20.05.2008
(51) Int. Cl.: B60S 3/04

(54) **Brushless type system and method for automatic washing of a vehicle**

(30) Priority: 23.05.2007 IT MI20071038
(71) Applicant: Ceccato, S.p.A., 36041 Alte Ceccato di Montecchio Maggiore (IT)
(72) Inventor: Pengo, Marzio, 36100 Vicenza (IT); Giacomini, Enrico, 36057 Arcugnano (Vicenza) (IT)
(74) Representative: Rapisardi, Mariacristina

(57) **Abstract**

Method and system for automatic washing of vehicles in a brushless washing system (1) of the type comprising spraying nozzles arranged in at least a first rototranslational arc structure (2) with respect to a vehicle (3) immobile at a washing position, comprises the steps of acquiring the spatial profile of the vehicle (3) when it is immobile at the washing position, using the spatial profile of the vehicle as the reference to generate a rototranslational movement profile of the first arc structure (2) with respect to the vehicle (3) immobile at the washing position in which fixed at a desired value is the distance of the first arc structure (2) from the spatial profile of the vehicle (3) and moving the first arc structure (2) along the movement profile keeping the modulus of the instantaneous velocity vector of the first arc structure (2) at a desired value.

## Description

The present invention refers to a system of the brushless type and a method for automatic washing of vehicles.

In a brushless washing system of the known type, the cleaning action is performed by chemical products combined with the action of the high pressure water.

Such systems provide for one or preferably two or more arcs of nozzles fixed on a carriage and arranged above the vehicle to perform one or more rototranslational washing travels with respect to the vehicle, during each of which the same or even a different specific washing agent is supplied.

The washing is inexpensive, free of damage risks for the vehicle and the performed washing cycle is sufficiently brief to optimise the productivity.

However, the washing quality does not always meet the required standards and it can vary depending on the profile of the vehicle.

This due to the fact that the distance of the vehicle from the spraying nozzles varies according to the shape of the vehicle. Each spraying nozzle usually has conical jet which determines an area of impact on the vehicle proportional to the distance of the nozzle from it. Should the distances be too short, the area of impact of the washing jets on the vehicle might not cover the shape of the vehicle in a uniform manner, in case of distances too far the washing jets might interfere negatively with each other.

Therefore, the technical task at the basis of the present invention is that of providing a system of the brushless type and a method for automatic washing of a vehicle, capable of eliminating the technical drawbacks observed in the known art.

Within this technical task, an objective of the invention is that of providing a system of the brushless type and a method for automatic washing of a vehicle always capable of guaranteeing an ideal washing quality regardless of the shape of the vehicle to be washed.

Another objective of the invention is that of providing a system of the brushless type and a method for automatic washing of a vehicle capable of guaranteeing a washing which is inexpensive, performable within a short period of time and free of damage risks for the vehicle.

Further objective of the, invention is that of providing an extremely compact system of the brushless type.

The technical task, as well as these and other objectives, according to the present invention are attained by providing a method and system for automatic washing of vehicles, in particular of the brushless type, according to claims 1 and 6 provided hereinafter. Furthermore. other characteristics of the present invention are defined in the subsequent claims.

Further characteristics and advantages of the invention shall be clearer from the description of a preferred but not exclusive embodiment of the system and method for automatic washing of vehicles according to the finding illustrated for indicative and non-limiting purposes in the attached drawings wherein:

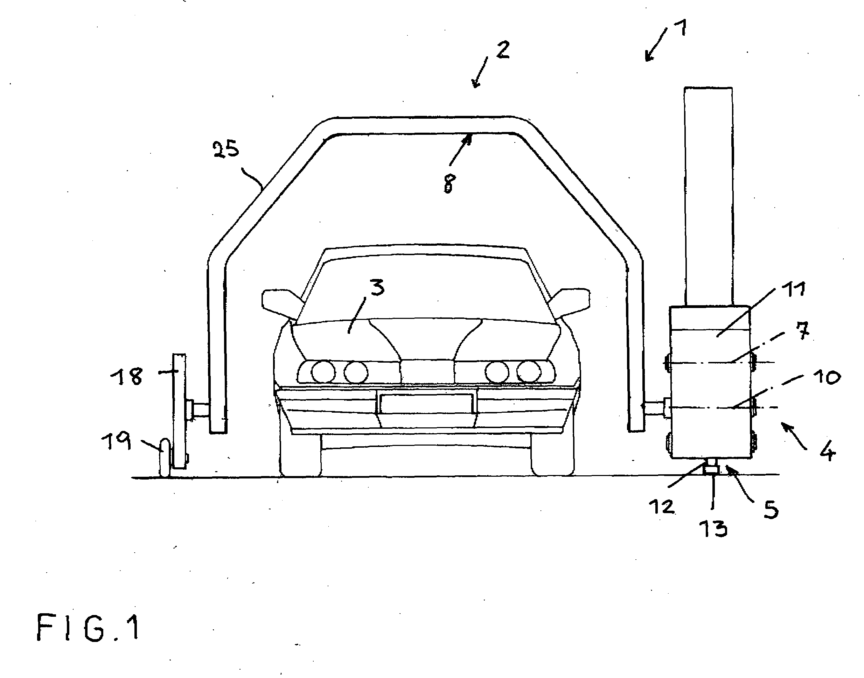

Figure 1 shows a front view of a two-arc system according top a preferred embodiment of the invention;

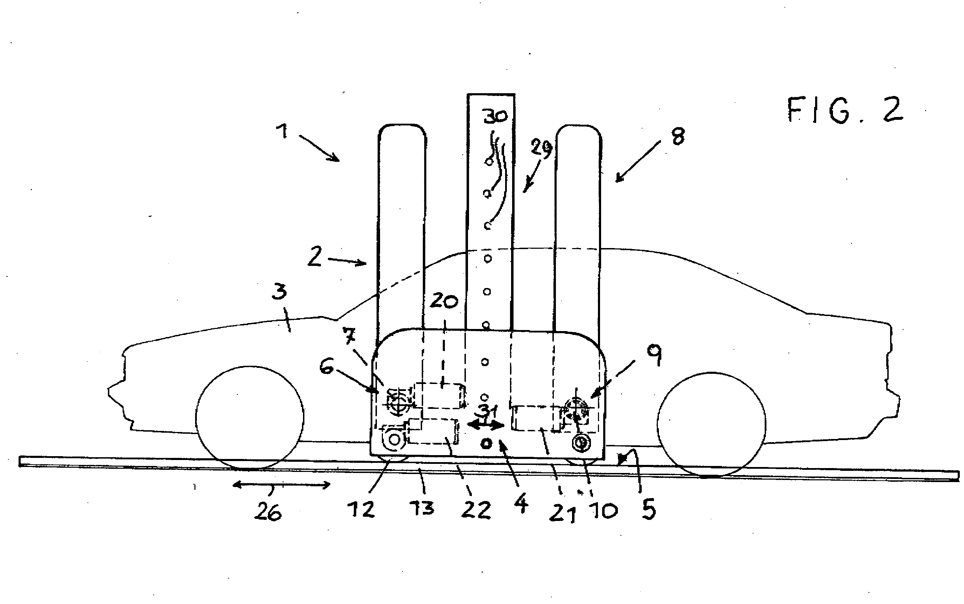

Figure 2 shows a side elevation view of the system of figure 1;

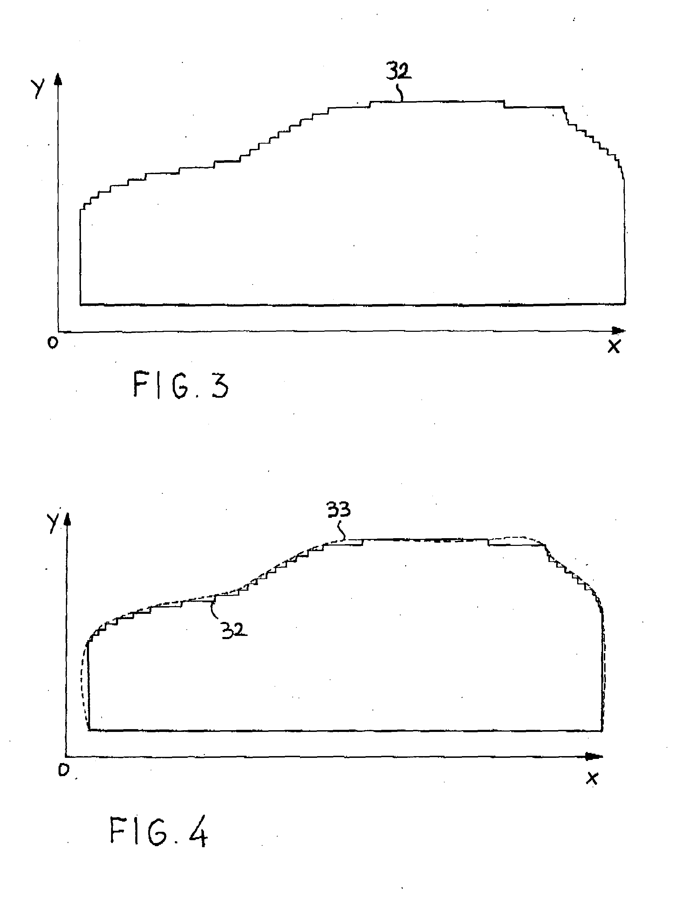

Figure 3 shows a diagram generated from the acquisition of the shape of the vehicle as discrete points in a Cartesian reference system in which the x abscissa indicates the position of the carriage along the translation direction and the y ordinate indicates the calculated height of the shape of the vehicle;
Figure 4 shows in the same Cartesian reference system of figure 3 a continuous curvilinear function representing the profile of the vehicle obtained by means of an interpolation algorithm of the discrete points of the acquisition diagram of figure 3;

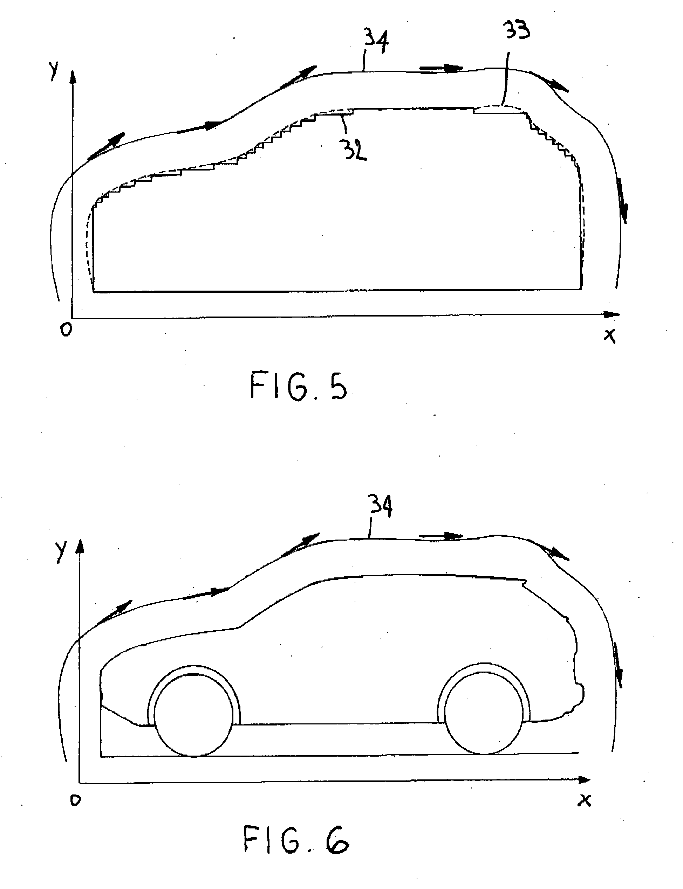

Figure 5 shows in the same Cartesian reference system of figure 3 a movement profile attributed to an arc structure of spraying nozzles keeping a constant distance with respect to the shape of the vehicle and
Figure 6 shows in the same Cartesian reference system of figure 3 the shape of the vehicle and movement profile of the arc structure which also has a constant modulus of the instantaneous velocity vector.

Referring to the abovementioned figures, shown is an automatic vehicle washing system, inn particular of the brushless type, generally indicated reference number 1.

The automatic washing system 1 comprises a first arc structure 2 provided with spraying nozzles (not shown) for at least a first washing agent, beneath which the vehicle 3 is meant to be positioned immobile for washing.

The first arc structure 2 is held rotating around a first axis of rotation 7 by support means 4 moveable in a translation direction 26 parallel to the main axis of the vehicle 3 by special translation means 5.

The first axis of rotation 7 is transverse to the translation direction 26 of the support means 4, in particular it is directed horizontally.

Advantageously, the washing system 1 comprises means for the acquisition of the spatial profile of the vehicle immobile at the washing position, connected to a control unit (nor shown) adapted to acquire the spatial profile of the vehicle 3 at least to calculate a first rototranslational movement profile of the first arc structure 2 which develops at a distance desired by the spatial profile of the vehicle 3, and to control the performance of the first movement profile with the desired modulus of the instantaneous velocity vector.

Preferably, the first rototranslational movement profile of the first arc structure 2 is developed at a constant distance from the spatial profile of the vehicle 3.

Furthermore, preferably, the first rototranslational movement profile has a constant modulus of the instantaneous velocity vector.

As shown more precisely in the abovementioned figures, the automatic washing system 1 preferably advantageously comprises at least a second arc structure 8 provided with spraying nozzles (not shown) for at least a second washing agent.

The second arc structure 8 is held rotating around a second axis of rotation 10 by support means 4.

The second axis of rotation 10 is parallel to the first axis of rotation 7 from which its is separated along the translation direction 26 of the support means 4 by a fixed distance.

Advantageously, the control unit is adapted to acquire the spatial profile of the vehicle 3 also for calculating a second rototranslational movement profile of the second arc structure 8 which develops at a desired distance and preferably constant with respect to the spatial profile of the vehicle, and adapted to control the performance of the second movement profile with the desired and preferably constant modulus of the instantaneous velocity vector.

The first arc structure 2 and the second arc structure 8 have the same size and shape and their axis of rotation 7 and 10 are coplanar in a horizontal plane.

In particular, seen from the front and with the same angular direction, the views of the shapes of the first and second arc structure 2 and 8 parallel to the translation direction 26 are perfectly overlapped.

The apical part of the first and second arc structure 2 and 8 has a taper 25 which allows each of the two arc structures 2 and 8 to perform a rotation up to 180° with a suitable angular phase relation without mutual interference.

The spraying nozzles present on each arc structure 2 and 8 are ordered in specialised multiple arcades for supplying different washing agents.

Provided can also be different ramps ion terms of number and type of nozzles, used to supply different washing agents and/or water preferably softened and purified through inverse osmosis, at a high pressure.

The support means 4 comprise a holding structure 11 outside which the arc structures 2 and 8 are projected, while the translation means 5 comprise a carriage 12 moveable along a fixed linear guide 13.

The first and the second arc structure 2 and 8 are joined at one of its ends to the holding structure 11, and at their other end to a plate 18 having a wheel 19 for support on the ground directed parallel to the translation direction 26 of the carriage 12.

Provided inside the holding structure 11 are geared motors 20 and 21 respectively for rotating the first and the second arch structure 2 and 8 respectively and the gear motor 22 which operates the translation of the carriage 12.

Advantageously, the gear motors 20 and 21 can be identical, given that they supply the same power due to the type of shape, size and symmetry of the arrangement of the axis of rotation 7 and 10 of the first and second arc structures 2 and 8.

Provided inside the holding structure 11 are means (not shown for intercepting and distributing the washing agents to each of the arc structures.

The washing agents can comprise different types of softeners, or softened water and water purified through inverse osmosis.

The means for acquiring the profile of the vehicle 3 in the preferred embodiment illustrated comprise at least a first vertical column 29 of photoelectric cells 30.

The first column 29 of photoelectric cells 30 is held by the support means 4 at a central position with respect to the carriage 12 according to the arrow 31 parallel to the translation direction 26 of the carriage 12.

The presence of the column 29 moveable from a central position of reference with respect to the carriage 12 allows the acquisition of the profile of the vehicle 3 maintaining a small overall dimension of the system given that in order to perform such operation the carriage 12 can project only partially from the front and the rear of the vehicle 3.

In a different embodiment, the acquiring means can comprise a first column of photoelectric cells and a second column of photoelectric cells held by the support means 4 at the opposite ends of the carriage 12 and in a fixed manner with respect to the carriage.

The automatic washing method comprises the steps of acquiring the spatial profile of the vehicle when it is immobile at the washing position, using the spatial profile of the as a reference to generate a rototranslational movement profile for each arc structure present with respect to the vehicle immobile at the washing position in which, as mentioned above, the distance of each arc structure is fixed at a desired and preferably constant value from the spatial profile of the vehicle and move each arc structure along the relative movement profile keeping also the instantaneous velocity vector modulus at a desired and preferably constant value.

Preferably, the acquisition of the of the profile of the vehicle generates a plurality of discrete acquisition values which are interpolated in such a manner to confer the special profile a continuous curvilinear function shape.

Though the concept can be easily extended to two or more are systems, we refer to a one arc system for the sake of simplicity.

Once the vehicle has been positioned under the system, the washing cycle starts with a travel to acquire the profile of the vehicle. This occurs by sliding the carriage 12 from its position of reference along the entire length of the vehicle.

The acquiring means initially provide discrete values which create a steps diagram 32.

Next, the control unit (PLC), through a special algorithm, interpolates the discrete values of the diagram 32 to obtain a regular and continuous 33 curvilinear function representing the profile of the vehicle.

Subsequently, the control unit calculates the movement profile 34 which guarantees a desired and preferably constant distance of the arc structure from the profile of the vehicle in such a manner that it kept at ideal high pressure jet impact distance from the profile of the vehicle.

Once through with this, the control unit coordinates the rotating movement of the arc structure in such a manner to perform an accurate copying of the movement profile keeping the instantaneous velocity vector at a desired and preferably constant distance along the entire section.

In this manner the repeatability of the ideal washing parameters and the ideal impact velocity are guaranteed, regardless of the profile of the vehicle to be washed.

Modifications and variants can be conceived falling within the scope of protection of the present invention.

For example, the detection of the shape is preferably performed but not necessarily through a photocells system.

Furthermore the acquisition system can be of the discrete acquisition values type or analogue acquisition type which does not require the interpolation step.

In practice the materials used, as well as the dimensions, may vary depending on the requirements and the state of art.

## Claims

1. Method for automatic washing of vehicles in a brushless system of the type comprising spraying nozzles arranged in at least one arc structure rototranlsating with respect to the vehicle immobile at a washing position, **characterised in that** it comprises the steps of acquiring the spatial profile of said vehicle when it is immobile at said washing position, using said spatial profile of said vehicle as a reference to generate a rototranslational movement profile of said at least first arc structure with respect to said vehicle immobile at said washing position in which set at a desired value from said spatial profile of said vehicle is the distance of said first arc structure, and moving said first arc structure along said movement profile by setting also the modulus of the instantaneous velocity vector of said first arc structure at a desired value.

2. washing method according to claim 1, **characterised in that** set at a constant value from said spatial profile of said vehicle is the distance of said first are structure.

3. Washing method according to claim 1, **characterised in that** set at a constant value is the modulus of the instantaneous velocity vector of said first arc structure.

4. washing method according to one or more of the preceding claims, **characterised in that** said acquisition of the profile of said vehicle is of the discrete acquisition points type, the points being interpolated in such a manner to confer to said spatial profile the shape of regular and continuous curvilinear function.

5. Washing method according to one or more of the preceding claims, **characterised in that** said acquisition of the profile of said vehicle is analogue.

6. System for automatic washing of vehicles, in particular of the brushless type, comprising at least a first arc structure provided with spraying nozzles for at least a first washing agent, rotating support means at least of said first arc structure around a first axis of rotation, and translation means of said support means in a translation direction parallel to the main axis of the vehicle, **characterised in that** it comprises means for acquiring the spatial profile of said vehicle immobile at the washing position, said acquiring means being connected to a control unit adapted to' acquire said special profile of said vehicle, processing a first rototranslational movement profile of said first arc structure, said first movement profile developing at a desired distance from said spatial profile of said vehicle and to control the performance of said first movement profile with the desired instantaneous velocity vector modulus.

7. System for automatic washing of vehicles according to the preceding claim, **characterised in that** it comprises at least a second arc structure provided with spraying nozzles for at least a second washing agent, held rotating by said support means around a second axis of rotation parallel to said first axis of rotation and separated from it, along said translation direction, by a fixed distance.

8. System for automatic washing of vehicles according to the preceding claim, **characterised in that** said control unit is adapted to acquire said spatial profile of said vehicle also to process a second rototranslation movement profile of said second arc structure, said second movement profile developing at a desired distance from said special profile of said vehicle, and to control the performance of said second movement profile with the desired instantaneous velocity vector modulus.

9. System for automatic washing of vehicles according to one or more of the preceding claims, **characterised in that** said translation means comprise a carriage mobile along a fixed linear guide which develops parallel to said translation direction.

10. System for automatic washing of vehicles according to one or more of the preceding claims, **characterised in that** said acquiring means comprise at least a first vertical column of photoelectric cells.

11. System for automatic washing of vehicles according to one or more of the preceding claims, **characterised in that** said first column of photoelectric cells is held by said support means at a central position with respect to said carriage and in a moveable manner with respect to said carriage in the said translation direction.

12. System for automatic washing of vehicles according to one or more of the preceding claims, **characterised in that** said acquiring means comprise a first column of photoelectric cells and a second column of photoelectric cells are held by said support means at the opposite ends of said carriage and in a fixed manner with respect to said carriage.

13. System for automatic washing of vehicles according to one or more of the preceding claims, **characterised in that** said first and second axis of rotation are horizontal and coplanar in a horizontal plane.

14. System for automatic washing of vehicles according to one or more of the preceding claims, **characterised in that** said first and second arc structures have the same shape and size.

15. System for automatic washing of vehicles according to one or more of the preceding claims, **characterised in that** said first and second arc structures have a taper towards their apical part to allow a rotation up to 180° with a suitable angular offset without mutual interference.

16. System and method for washing as described and claimed.
